# EUROPÄISCHE PATENTANMELDUNG

(11) **EP 4 191 753 A1**
(43) Veröffentlichungstag der Anmeldung: **07.06.2023**
(21) Anmeldenummer: 22211156.9
(22) Anmeldetag: 02.12.2022
(51) Int. Cl.: H01M 10/658, H01M 50/291, H01M 50/293

(54) **ENERGIESPEICHERSYSTEM**

(30) Priorität: 06.12.2021 DE 102021132072
(71) Anmelder: Carl Freudenberg KG, 69469 Weinheim (DE)
(72) Erfinder: Kritzer, Peter, 67147 Forst (DE); Zuber, Richard, 69517 Gorxheimertal (DE); Leichner, Tim, 67591 Mörstadt (DE); Woll, Daniela, 64625 Bensheim (DE); Striefler, Armin, 74613 Öhringen (DE); Möhring, Dirk, 69509 Mörlenbach (DE); Jedrowicz, Grazyna, 69469 Weinheim (DE); Morgenstern, Stefan, 69469 Weinheim (DE); Johe, Maik, 64385 Reichelsheim (DE); Heinemann, Joachim, 69469 Weinheim (DE)

(57) **Zusammenfassung**

Energiespeichersystem (1), umfassend ein Gehäuse (2), in welchem mehrere Speicherzellen (3) angeordnet sind, wobei die Speicherzellen (3) mittels einer zwischen den Speicherzellen (3) angeordneten Einrichtung (4) voneinander getrennt sind, wobei die Einrichtung (4) zumindest zwei Lagen (5), (6) aufweist, wobei eine erste Lage eine Anpresslage und eine zweite Lage (6) eine Isolationslage bildet.

## Beschreibung

Die Erfindung betrifft ein Energiespeichersystem, umfassend ein Gehäuse, in welchem mehrere Speicherzellen angeordnet sind, wobei die Speicherzellen mittels einer zwischen den Speicherzellen angeordneten Einrichtung voneinander getrennt sind, wobei die Einrichtung zumindest zwei Lagen aufweist.

Ein derartiges Energiespeichersystem ist aus der DE 10 2018 113 185 A1 bekannt. Energiespeichersysteme, insbesondere wiederaufladbare Speicher für elektrische Energie, sind vor allem in mobilen Systemen weit verbreitet. Wiederaufladbare Speicher für elektrische Energie werden beispielsweise in tragbaren elektronischen Geräten wie Smartphones oder Laptops eingesetzt. Des Weiteren werden wiederaufladbare Speicher für elektrische Energie vermehrt zum Bereitstellen von Energie für elektrisch angetriebene Fahrzeuge eingesetzt. Dabei ist eine große Bandbreite elektrisch angetriebener Fahrzeuge denkbar, neben Personenkraftwagen beispielsweise auch Zweiräder, Kleintransporter oder Lastkraftwagen. Anwendungen in Robotern, Schiffen, Flugzeugen und mobilen Arbeitsmaschinen sind ebenfalls denkbar. Weitere Einsatzgebiete von elektrischen Energiespeichersystemen sind stationäre Anwendungen, beispielsweise in Backup-Systemen, in Netzwerkstabilisierungssystemen und zur Speicherung elektrischer Energie aus erneuerbaren Energiequellen.

Ein häufig eingesetztes Energiespeichersystem ist dabei ein wiederaufladbarer Speicher in Form eines Lithium-Ionen-Akkumulators. Lithium-Ionen-Akkumulatoren weisen, wie andere wiederaufladbare Speicher für elektrische Energie auch, zumeist mehrere Speicherzellen auf, welche gemeinsam in einem Gehäuse verbaut sind.

Mehrere elektrisch miteinander verbundene Speicherzellen werden dabei meist zu einem Modul zusammengefasst.

Dabei erstreckt sich das Energiespeichersystem nicht nur auf Lithium-Ionen-Akkumulatoren. Auch andere wiederaufladbare Batterie-Systeme wie Lithium-Schwefel-Batterien, Feststoff-Batterien, Natrium-Ionen-Batterien oder Metall-Luft-Batterien sind denkbare Energiespeichersysteme. Des Weiteren kommen auch Superkondensatoren als Energiespeichersystem in Betracht.

Energiespeichersysteme in Form von wiederaufladbaren Speichern weisen die höchste elektrische Kapazität sowie die beste Leistungsaufnahme und -abgabe nur in einem begrenzten Temperaturspektrum auf. Bei Über- bzw. Unterschreiten des optimalen Betriebstemperaturbereichs fallen die Kapazität, die Leistungsaufnahmefähigkeit und die Leistungsabgabefähigkeit des Speichers stark ab und die Funktionalität des Energiespeichers ist beeinträchtigt. Zu hohe Temperaturen können darüber hinaus den Energiespeicher irreversibel schädigen. Demnach sollen sowohl dauerhaft auftretende erhöhte Temperaturen als auch kurzfristige Temperaturspitzen unbedingt vermieden werden. Bei Lithium-Ionen-Akkumulatoren sollen beispielsweise dauerhaft Temperaturen von mehr als 50 °C und kurzfristige Temperaturspitzen von mehr als 80 °C nicht überschritten werden.

Insbesondere bei Anwendungen in Personenkraftwagen wird eine Schnellladefähigkeit der Energiespeichersysteme gefordert. Dabei sollen die ein Energiespeichersystem bildenden Akkumulatoren innerhalb kurzer Zeit, beispielsweise innerhalb von 15 Minuten vollständig oder nahezu vollständig geladen werden. Aufgrund des Wirkungsgrades des Ladesystems von etwa 90 % bis 95 % werden während des Ladevorgangs im Energiespeichersystem große Wärmemengen freigesetzt, welche aus dem Energiespeichersystem abgeführt werden müssen. Diese Wärmemengen werden im normalen Betriebszustand nicht freigesetzt. Daher ist es erforderlich, das Kühlsystem des Energiespeichersystems so auszulegen, dass die beim Ladevorgang auftretende Wärmemenge aufgenommen werden kann.

Zu hohe Temperaturen können zu einer irreversiblen Schädigung des Energiespeichersystems führen. In diesem Zusammenhang ist insbesondere bei Lithium-Ionen-Zellen das sogenannte thermische Durchgehen ("*thermal runaway*") bekannt. Dabei werden in kurzer Zeit hohe thermische Energiemengen sowie gasförmige Abbauprodukte frei, woraus ein hoher Druck und hohe Temperaturen im Gehäuse resultieren. Dieser Effekt ist insbesondere problematisch bei Energiespeichersystemen mit hoher Energiedichte, wie sie beispielsweise zur Bereitstellung elektrischer Energie in elektrisch angetriebenen Fahrzeugen erforderlich ist. Durch zunehmende Energiemengen der einzelnen Zellen und Erhöhung der Packungsdichte der in dem Gehäuse angeordneten Zellen vergrößert sich die Problematik des thermischen Durchgehens.

Im Bereich einer durchgehenden Zelle können an der Gehäusewand der Zelle über eine Zeitdauer von mehreren Minuten Temperaturen im Bereich von 600 °C bis 1.000 °C entstehen. Die Einrichtung zum thermischen Isolieren muss einer derartigen Beanspruchung standhalten und den Energieübergang auf Nachbarzellen so reduzieren, dass die Temperaturbelastung der Nachbarzellen lediglich höchstens 150 °C beträgt. Wesentlich ist die Begrenzung der Energieübertragung auf Nachbarzellen, um zu verhindern, dass auch diese thermisch durchgehen.

Insbesondere auf dem Gebiet der Elektromobilität besteht ein Bedürfnis, auf geringem Raum eine hohe Energiedichte zu erzielen, was jedoch den zur Verfügung stehenden Raum für die Isolation der Zellen beschränkt. Um zu verhindern, dass einzelne Speicherzellen einer zu hohen thermischen Belastung ausgesetzt sind, ist es auch erforderlich, von der Speicherzelle freigesetzte Wärme abzuführen. Dementsprechend ist es zumeist nicht ausreichend, Speicherzellen lediglich zu isolieren.

Über die Lebensdauer betrachtet sind Lithium-Ionen-Akkumulatoren einer Volumenänderung unterworfen, wobei das Volumen mit steigender Lebensdauer zunimmt. Bei Pouch-Zellen macht sich dies beispielsweise durch Ausbauchen bemerkbar. Hinzu kommt eine zyklische Volumenänderung bei jedem Lade- bzw. Entladevorgang. Die Volumenänderung der Speicherzellen muss durch die Einrichtung kompensiert werden. Entweder erfolgt dies durch ein Verspannen der Speicherzellen untereinander, was mit einem sehr großen Druckanstieg verbunden ist. Alternativ werden Kompressionselemente zwischen den Speicherzellen angeordnet, die Volumenänderungen der Speicherzellen aufnehmen.

Bei den aus dem Stand der Technik bekannten Einrichtungen verringert sich die thermische Isolierwirkung mit zunehmender Verpressung, zumeist ist die Wärmeübertragung umgekehrt proportional zum Abstand der Speicherzellen.

Der Erfindung liegt die Aufgabe zugrunde, ein Energiespeichersystem bereitzustellen, welches bei einer hohen Energiedichte eine lange Lebensdauer und eine hohe Betriebssicherheit sicherstellt.

Diese Aufgabe wird mit den Merkmalen von Anspruch 1 gelöst. Auf vorteilhafte Ausgestaltungen nehmen die Unteransprüche Bezug.

Das erfindungsgemäße Energiespeichersystem umfasst ein Gehäuse, in welchem mehrere Speicherzellen angeordnet sind, wobei die Speicherzellen mittels einer zwischen den Speicherzellen angeordneten Einrichtung voneinander getrennt sind, wobei die Einrichtung zumindest zwei Lagen aufweist, wobei eine erste Lage eine Anpresslage und eine zweite Lage eine Isolationslage bildet. Dabei ist die zweite Lage vorzugsweise inkompressibel ausgebildet.

Bei dieser Ausgestaltung ist die Isolationslage auf die thermische Isolierung optimiert, während die Anpresslage auf mechanische Eigenschaften optimiert ist. Die thermische Isolierung kann durch inkompressible Ausgestaltung der Isolationslage verbessert werden.

Dabei können mehrere erste Lagen und/oder mehrere zweite Lagen vorgesehen sein. Die Gesamtdicke der Einrichtung beträgt vorzugsweise zwischen 0,5 mm und 6 mm. Die Gesamtdicke zwischen 0,5 mm und 6 mm ist dabei vorzugsweise auch dann gegeben, wenn die Einrichtung mit einer Flächenpressung von bis zu 100 kPa beaufschlagt ist. Anpresslage und Isolationslage sind vorzugsweise im Sinne einer Reihenschaltung nebeneinander angeordnet.

Dabei ist denkbar, dass die Einrichtung neben der Isolationslage und der Anpresslage weitere Lagen umfasst. In diesem Zusammenhang ist denkbar, eine Applizierlage, eine Feuerschutzlage, eine Partikelrückhaltelage und/oder eine Kühlkörperlage vorzusehen. Insgesamt ergibt sich eine Einrichtung, welche optimierte mechanische Eigenschaften aufweist, so dass eine hohe Energiedichte und ein kompaktes Anordnen der Speicherzellen möglich sind, während die Isolationslage thermisch optimiert ist und eine Isolation benachbarter Speicherzellen bewirkt.

Die Isolationslage kann zusätzlich endotherme Eigenschaften aufweisen. Dabei weist die Isolationslage endotherme Eigenschaften vorzugsweise in einem Temperaturbereich zwischen 150°C und 500 °C auf. Bei dieser Ausgestaltung kann das Anpresselement von den Speicherzellen emittierte Energie aufnehmen, wodurch ein unzulässig hoher Temperaturanstieg in oder an den Speicherzellen vermieden werden kann. Es ist auch denkbar, dass die Anpresslage thermisch leitfähig ausgerüstet ist. Beispielsweise ist es denkbar, Metall-Hydroxyde oder Metall-Carbonate vorzusehen.

Die Anpresslage kann endotherme Eigenschaften aufweisen. Dadurch, dass die Anpresslage endotherm und/oder wärmeleitend ausgebildet sein kann, kann die Isolationslage auf eine hohe thermische Isolierung ausgelegt sein. Somit kann durch die Isolationslage vermieden werden, dass ein unzulässig hoher Wärmeaustausch zwischen benachbarten Speicherzellen erfolgt. Temperaturspitzen, die beispielsweise bei Schnellladevorgängen auftreten können, können hingegen über die Anpresslage aufgrund der endothermen bzw. wärmeleitenden Ausrüstung abgeführt werden. Die Anpresslage kann endotherm reagierende Materialien enthalten, beispielsweise Metall Hydroxyde oder Metall-Carbonate oder Zitronensäure. Denkbar ist auch, dass die Anpresslage mit Fasern aus endotherm reagierenden Materialien ausgerüstet ist.

Vorzugsweise weist die Anpresslage einen Wärmeleitkoeffizienten von bis zu 1,5 W/(m·K) auf. Die Isolationslage weist vorzugsweise einen Wärmeleitkoeffizienten von maximal 0,2 W/(m·K) auf.

Die Anpresslage kann elastisch ausgebildet sein. Dadurch ist es einerseits möglich, dass die Speicherzellen gezielt verpresst werden. Andererseits kann die Anpresslage Volumenänderungen der Speicherzellen aufnehmen. Hierzu ist es denkbar, dass die Anpresslage verformbar ausgestaltet ist. Dies kann beispielsweise durch eine Formgebung der Anpresslage erfolgen. Das Material der Anpresslage kann auch verformbar sein oder die Anpresslage kann verformbare Materialien enthalten. Verformbare Materialien sind beispielsweise Materialien mit einer intrinsischen Porosität aufweisen.

Vorzugsweise ist die Anpresslage mechanisch verformbar. Besonders bevorzugt ist bei einer Flächenpressung zwischen 30 kPa und 1.500 kPa eine Verformbarkeit von mindestens 50 % gegeben. Das bedeutet, dass sich die Dicke der Anpresslage bei ansteigender Flächenpressung verringert und dabei auf mindestens 50 % der Ausgangsdicke reduzierbar ist.

Vorzugsweise ist die Isolationslage mechanisch weniger verformbar als die Anpresslage. Besonders bevorzugt ist für die Isolationslage bei einer Flächenpressung zwischen 30 kPa und 1.500 kPa eine Verformbarkeit von höchstens 30 % gegeben. Das bedeutet, dass sich zwar auch die Dicke der Isolationslage bei ansteigender Flächenpressung verringern kann. Die Isolationslage ist dabei aber vorzugsweise nur auf maximal 70 % der Ausgangsdicke reduzierbar. Dadurch bietet die Isolationslage auch bei hoher Verpressung der Einrichtung noch gute thermische Isolationseigenschaften.

Bei mechanischer Belastung ist die Kompression der Anpresslage vorzugsweise wenigstens doppelt so hoch wie die Kompression der Isolationslage.

Die Anpresslage kann aus elastischem Werkstoff ausgebildet sein. Insbesondere ist denkbar, dass die Anpresslage aus elastomerem Werkstoff ausgebildet ist.

Die Anpresslage kann auf einer der Speicherzelle zugewandten Seite strukturiert sein. Die Strukturierung verbessert einerseits die Verformbarkeitseigenschaften der Anpresslage und hat andererseits auch eine thermische Wirkung. Je nach Ausgestaltung der Strukturierung können sich zwischen Speicherzelle und Anpresslage Kanäle ergeben, über die von den Speicherzellen emittierte Wärme abgeführt werden kann. Es ist auch denkbar, dass die Strukturierung eine thermische Isolation bewirkt. Dementsprechend ist denkbar, aus der Anpresslage fluidleitende Strukturen auszubilden. Die fluidleitenden Strukturen ermöglichen es auch, im Falle eines thermischen Durchgehens aus einer Speicherzelle austretende Gase abzuleiten.

Die Anpresslage kann die Isolationslage entlang der Kanten zumindest teilweise umgeben. Bei dieser Ausgestaltung reicht die Anpresslage zumindest abschnittsweise um die Isolationslage herum. Dabei kann die Anpresslage so ausgebildet sein, dass die Isolationslage in die Anpresslage eingebettet ist.

Die Isolationslage kann aus porösem Material ausgebildet sein. Poröse Materialien sind beispielsweise Faserwerkstoffe wie Vliesstoffe, polymerbasierte Schäume oder andere schaumartige feste Materialien. Des Weiteren können die porösen Materialien Zeolithe, Aerogele, Pyrobubbles oder gasgefüllte Hohlkugeln umfassen. Weiterhin denkbar ist der Einsatz von Aktivkohle. Die Isolationslage kann auch ein faserbasiertes Flächengebilde sein. Denkbar sind auch schaumbasierte Grundmaterialien, in welche die partikulären Isolationsmaterialien eingebettet sind. Denkbar sind weiterhin Schüttungen pulverförmiger Isolationsmaterialien in vorgesehene Bereiche in der Anpresslage.

Zwischen Isolationslage und Anpresslage kann eine Verstärkungslage angeordnet sein. Die Verstärkungslage kann aus einer Folie ausgebildet sein und aus Kunststoff, Metall oder Graphit bestehen.

Die Isolationslage kann teilweise aus anorganischem Material ausgebildet sein. Dabei ist die Isolationslage vorzugsweise inkompressibel, aber elastisch verformbar. Insbesondere ist denkbar, dass die Isolationsschicht faserhaltiges Material umfasst.

Vorzugsweise ist die Isolationslage so ausgebildet, dass diese bei einer flächigen Druckbeaufschlagung der Einrichtung von 1 MPa eine Porosität von mindestens 40 % aufweist. Die Wärmeleitfähigkeit soll auch bei maximaler Druckbeaufschlagung höchstens 0,15 W/(m·K) betragen. Die Porosität der Isolationslage beträgt im unbelasteten Zustand vorzugsweise mindestens 60 %.

Der Anteil der anorganischen Materialien in der Isolationslage kann wenigstens 60 Gewichtsprozente betragen. Als anorganische Materialien kommen insbesondere Fasern, Hohlkugeln, Aerogele, hochporöse Partikel und/oder dergleichen in Betracht.

Die Anpresslage kann aus polymeren Materialien, beispielsweise aus Elastomer, aus thermoplastischem Elastomer, aus Thermoplasten oder Duroplasten bestehen. Die Anpresslage kann aus Metall und/oder Keramik bestehen.

Einige Ausgestaltungen des erfindungsgemäßen Energiespeichersystems werden nachfolgend anhand der Figuren näher erläutert. Diese zeigen, jeweils schematisch:
- Fig. 1: ein Energiespeichersystem mit einer Einrichtung;
- Fig. 2: eine Darstellung des mechanischen Arbeitsbereiches der Einrichtung;
- Fig. 3: eine Einrichtung gemäß einer ersten Ausgestaltung im Schnitt;
- Fig. 4: eine Einrichtung gemäß einer zweiten Ausgestaltung im Schnitt;
- Fig. 5: eine Einrichtung gemäß einer dritten Ausgestaltung im Schnitt;
- Fig. 6: eine Einrichtung gemäß einer vierten Ausgestaltung im Schnitt;
- Fig. 7: eine Einrichtung gemäß einer fünften Ausgestaltung im Schnitt;
- Fig. 8: die Einrichtung gemäß Fig. 6 in der oberen Darstellung unbelastet, in der unteren Darstellung mechanisch belastet;
- Fig. 9: die Einrichtung gemäß einer sechsten Ausgestaltung in der oberen Darstellung unbelastet, in der unteren Darstellung mechanisch belastet;
- Fig. 10: die Einrichtung gemäß einer siebten Ausgestaltung in der oberen Darstellung unbelastet, in der unteren Darstellung mechanisch belastet;
- Fig. 11: die Einrichtung gemäß Fig. 6 mit einer zusätzlichen Lage in der oberen Darstellung unbelastet, in der unteren Darstellung mechanisch belastet;
- Fig. 12: die Einrichtung gemäß Fig. 9 mit einer zusätzlichen Lage;
- Fig. 13: die Einrichtung gemäß Fig. 12 in einer weiteren Ausgestaltung;
- Fig. 14: die Einrichtung gemäß Fig. 10 mit einer zusätzlichen Lage;
- Fig. 15: die Einrichtung gemäß Fig. 9 mit beidseitiger Isolationslage, wobei die Isolationslage die Anpresslage allseitig umgibt;
- Fig. 16: die Einrichtung gemäß Fig. 9 mit beidseitiger Isolationslage, wobei die Isolationslage die Anpresslage entlang der Hauptseiten bedeckt;
- Fig. 17: eine Einrichtung mit Rahmenelement gemäß erster Ausgestaltung;
- Fig. 18: eine Einrichtung mit Rahmenelement gemäß zweiter Ausgestaltung;
- Fig. 19: eine Einrichtung mit Rahmenelement gemäß dritter Ausgestaltung;
- Fig. 20: eine Einrichtung gemäß der Figuren 17, 18 oder 19, wobei das Rahmenelement die Einrichtung entlang der Kanten allseitig umgibt;
- Fig. 21: eine Einrichtung gemäß der Figuren 17, 18 oder 19, wobei das Rahmenelement die Einrichtung entlang zweier einander gegenüberliegender Kanten bedeckt;
- Fig. 22: eine Einrichtung gemäß Figur 3 mit zusätzlichem Kantenelement;
- Fig. 23: eine Einrichtung gemäß Figur 17 mit zusätzlichem Kantenelement;
- Fig. 24: eine Einrichtung gemäß Figur 16 mit zusätzlichem Kantenelement;
- Fig. 25: eine Einrichtung gemäß Figur 6 mit einer zusätzlichen Abdecklage, welche bündig mit der Isolationslage abschließt;
- Fig. 26: eine Einrichtung gemäß Figur 6 mit einer zusätzlichen Klebelage;
- Fig. 27: eine Einrichtung gemäß Figur 6 mit zwei zusätzlichen Klebelagen.

Die Figuren zeigen ein Energiespeichersystem 1 zum Speichern elektrischer Energie. Vorliegend umfasst das Energiespeichersystem 1 ein Gehäuse 2, in welchem mehrere Speicherzellen 3 in Form von elektrochemischen Akkumulatoren angeordnet sind. Die Speicherzellen 3 sind vorliegend als Lithium-Ionen-Akkumulatoren ausgebildet. In einer alternativen Ausgestaltung können die Speicherzellen 3 als Feststoff-Akkumulator ausgebildet sein. Die Speicherzellen 3 sind in Form von prismatischen Zellen ausgebildet. In alternativen Ausgestaltungen können die Speicherzellen 3 auch als Pouch-Zellen oder Rundzellen ausgebildet sein. Die Speicherzellen 3 sind nebeneinander in dem Gehäuse 2 angeordnet und bilden einen Stack.

Die Speicherzellen 3 sind mittels einer zwischen den Speicherzellen 3 angeordneten Einrichtung 4 thermisch voneinander getrennt und mechanisch abgestützt. Dabei umfasst die Einrichtung 4 zumindest zwei Lagen 5, 6, wobei eine Lage 5 eine Anpresslage und eine Lage 6 eine Isolationslage bildet.

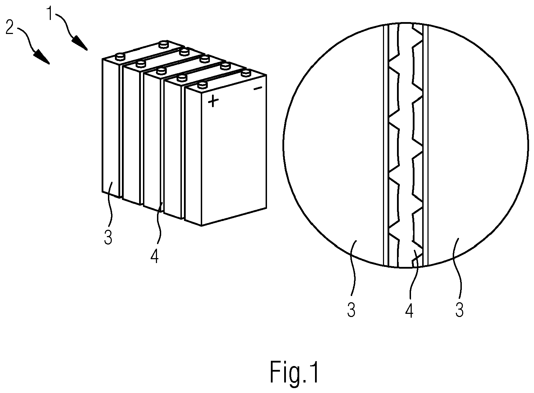

Figur 1 zeigt eine erste Ausgestaltung des zuvor beschriebenen Energiespeichersystems 1. Die zwischen zwei Speicherzellen 3 angeordnete Einrichtung 4 umfasst eine zweite Lage 6, welche inkompressibel ist und eine Isolationslage bildet und beidseitig der zweiten Lage 6 sind erste Lagen 5 angeordnet, welche kompressibel sind und Anpresslagen bilden.

Die Anpresslagen 5 weisen Erhebungen und Einbuchtungen auf. Des Weiteren sind die Anpresslagen 5 aus elastomeren Material ausgebildet. Durch die Strukturierung der Anpresslagen 5 und durch den elastomeren Werkstoff sind die Anpresslagen 5 sehr verformbar ausgestaltet. Die Anpresslagen 5 sind ferner ausgebildet, von den Speicherzellen 3 emittierte Wärme aufzunehmen und abzuführen. Die Isolationslage 6 hingegen bewirkt eine thermische Isolierung benachbarter Speicherzellen 3.

Bei der vorliegenden Ausgestaltung beträgt die Wärmeleitfähigkeit der Isolationslage 6 0,1 W/(m·K). Die Einrichtung 4 weist eine endotherme Wärmeaufnahme von mindestens 300 kJ/kg auf. Bei der vorliegenden Ausgestaltung beträgt die Dicke der Einrichtung 4 im unbelasteten Zustand 4 mm und in montiertem, verspanntem Zustand 3 mm.

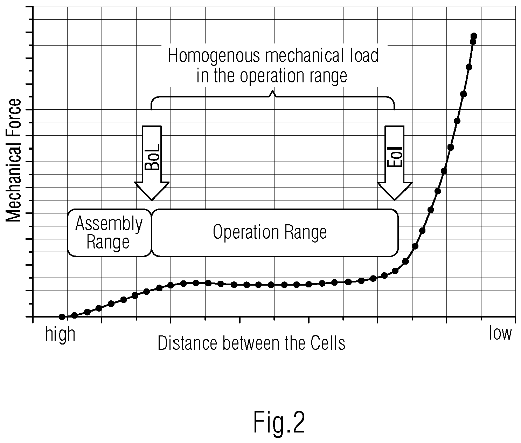

Figur 2 zeigt den idealen mechanischen Arbeitsbereich einer Einrichtung 4. Dabei ist zu erkennen, dass das Anschwellen der Speicherzellen 3 - gleichbedeutend mit der Abnahme des Spaltes zwischen den Speicherzellen 3 - im Arbeitsbereich nicht zu einer zu erheblichen Zunahme der mechanischen Kräfte führt.

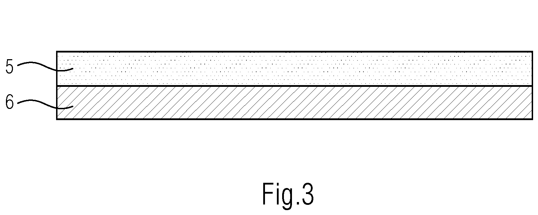

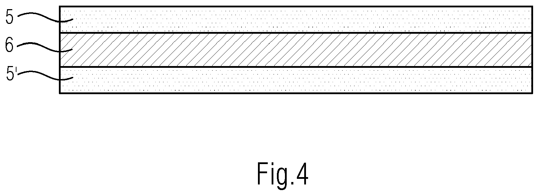

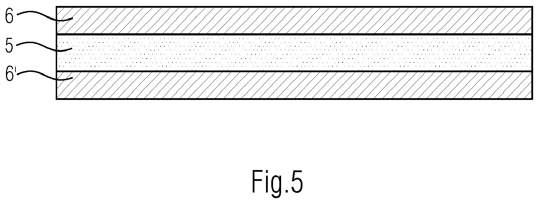

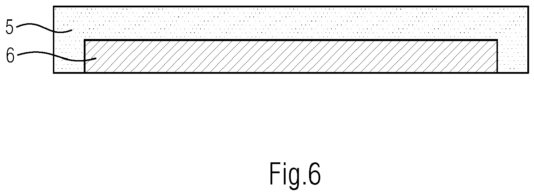

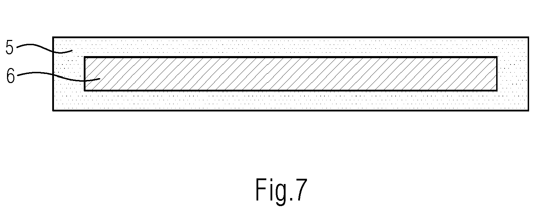

Figuren 3 bis 7 zeigen im Detail die Einrichtung 4 des in Figur 1 gezeigten Energiespeichersystems 1. Die Einrichtung 4 umfasst vorliegend zwei Lagen 5, 6, wobei eine erste Lage 5 eine Anpresslage und eine zweite Lage 6 eine Isolationslage bildet. Bei der Ausgestaltung gemäß Figur 3 sind die Anpresslage 5 und die Isolationslage 6 als zwei durchgängige Lagen ausgeführt. Bei der Ausgestaltung gemäß Figur 4 ist die Isolationslage 6 beidseitig von Anpresslagen 5 und 5' umgeben. Bei der Ausgestaltung gemäß Figur 5 ist die Anpresslage 5 beidseitig von Isolationslagen 6 und 6' umgeben. Bei der Ausgestaltung gemäß Figur 6 umgibt die Anpresslage die Isolationslage 6 entlang von zwei Stirnseiten. Bei der Ausgestaltung gemäß Figur 7 ist die Isolationslage 6 in die Anpresslage 5 eingebettet.

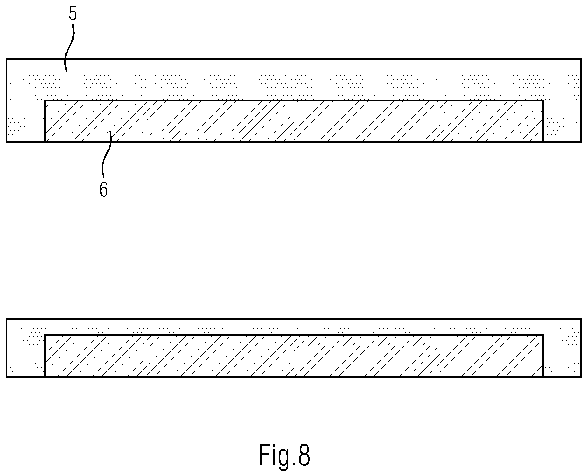

Figur 8 zeigt die in Figur 6 gezeigte Einrichtung 4, wobei die Anpresslage 5 der Einrichtung durch Volumenänderung der Speicherzellen 3 verformt wird. Herbei wird vornehmlich die Anpresslage 5 verformt. Aufgrund ihrer Ausgestaltung ist diese Lage 5 für die thermische Isolation nur untergeordnet relevant, ihre Verpressung führt nicht zu einer Verschlechterung der thermischen Eigenschaften der Einrichtung 4. Die Isolationslage 6 wird hingegen bei Verformung nicht, beziehungsweise nur in untergeordnetem Maße komprimiert. Dadurch behält die Isolationslage 6 ihre thermische Isolationsfähigkeit auch bei einem verpressten System. In dem vorliegendem Ausführungsbeispiel besteht die Anpresslage 5 aus einem silikonbasierten Schaum. Die Isolationslage 6 besteht aus einem Vliesstoff aus vorwiegend anorganischen Fasern mit einer Füllung aus anorganischen Isolationselementen, hier aus Aerogelen. In alternativen Ausgestaltungen können auch anorganische Hohlkugeln oder poröse anorganische Partikel zum Einsatz gelangen.

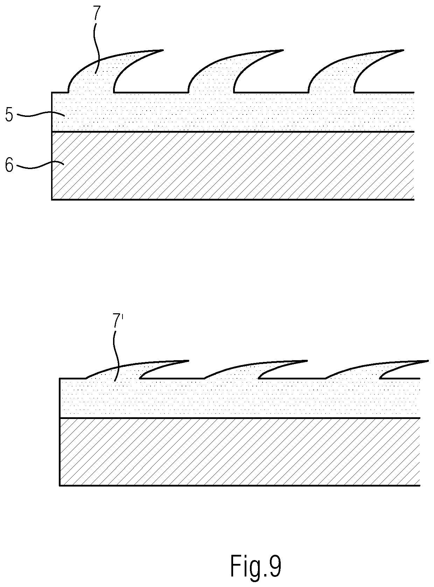

Figur 9 zeigt das in Figur 1 gezeigte Energiespeichersystem 1, wobei die Anpresslage 5 der Einrichtung durch Volumenänderung der Speicherzellen 3 verformt wird. Die Verformung erfolgt hierbei durch aus der Anpresslage 5 ausgebildete, verformbare Strukturelemente 7. In dieser Ausführung besteht die Anpresslage 5 aus einem mechanisch robusten Vollmaterial, hier einem Silikon-Elastomer. Bei mechanischer Belastung legen sich die verformbaren Strukturelemente 7 zu einem verpressten Zustand 7' an, so dass die Anpresslage 5 die Volumenausdehnung der Speicherzellen 3 aufnehmen kann.

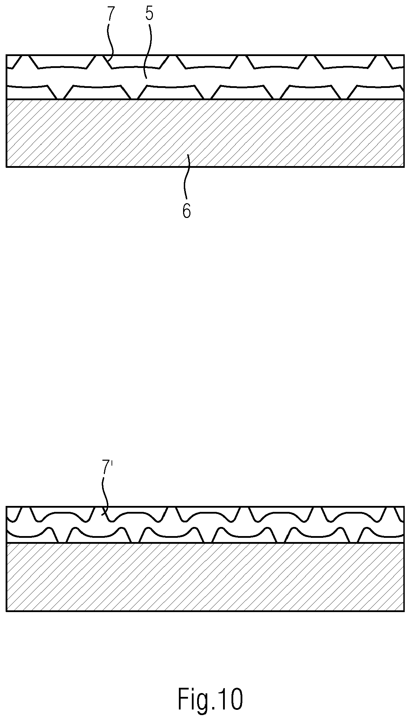

Figur 10 zeigt eine weitere Ausgestaltung der Einrichtung 4, wobei die Anpresslage 5 durch Volumenänderung der Speicherzellen 3 verformt wird. Die Verformung erfolgt hier durch verformbare Strukturelemente 7 der Anpresslage 5. In diesem Fall wird die komplette Struktur der Anpresslage 5 verformt.

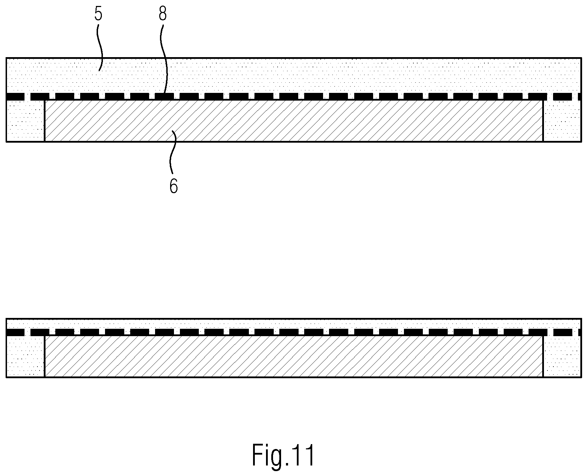

Figur 11 zeigt die Einrichtung 4 gemäß Figur 6, wobei zwischen Anpresslage 5 und Isolationslage 6 eine Verstärkungslage 8 angeordnet ist. Die Verstärkungslage 8 ist eine feste Lage und besteht aus einem anorganischen Material. Das anorganische Material kann Keramik, Graphit oder Metall oder ein Duroplast sein. Bei Verformung der Anpresslage 5 verteilt sie die Verpressung über die Fläche der Einrichtung 4. Zusätzlich verteilt die Verstärkungslage 8 Wärme in der Ebene der Einrichtung 4.

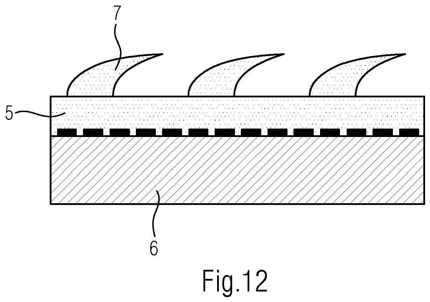

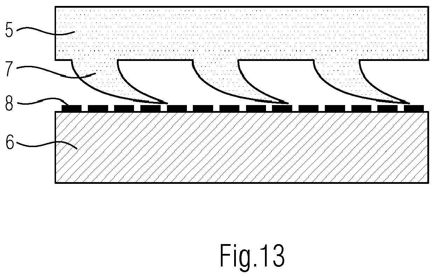

Figuren 12 und 13 zeigen jeweils eine Einrichtung 4 gemäß Figur 9, wobei zwischen Anpresslage 5 und Isolationslage 6 eine Verstärkungslage 8 angeordnet ist. Die Verstärkungslage 8 ist zwischen der Anpresslage 5 und der Isolationslage 6 angeordnet. Die Verstärkungslage 8 verteilt die durch die Deformation der Anpresslage 5 auftretenden Druckinhomogenitäten, welche durch die verformbaren Strukturelemente 7 hervorgerufen werden. Durch die Verstärkungslage 8 ist der Druck auf die Isolationslage 6 weitgehend gleich verteilt. Dies schützt die Isolationslage 6 vor lokalen Druckspitzen. Die verformbaren Strukturelemente 7 können dabei von der Isolationslage 6 abgewandt (Figur 12) oder zu der Isolationslage 6 gerichtet sein (Figur 13).

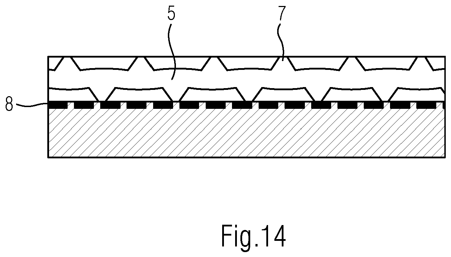

Figur 14 zeigt eine Einrichtung gemäß Figur 10, wobei zwischen Anpresslage 5 und Isolationslage 6 eine Verstärkungslage 8 angeordnet ist. Die Verstärkungslage 8 ist eine feste Lage und besteht aus einem anorganischen Material. Das anorganische Material kann Keramik, Graphit oder Metall oder ein Duroplast sein. Bei Verformung der Anpresslage 5 verteilt sie die Verpressung über die Fläche der Einrichtung 4. Zusätzlich verteilt die Verstärkungslage 8 Wärme in der Ebene der Einrichtung 4.

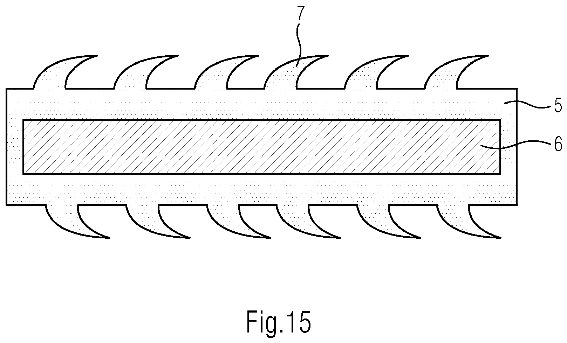

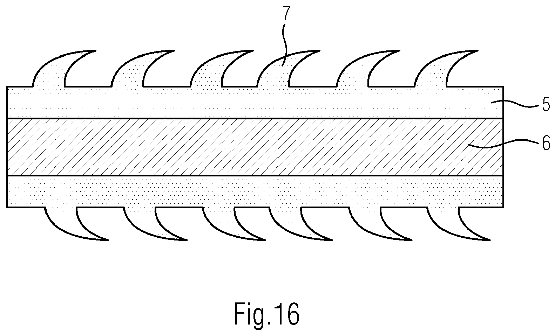

Figuren 15 und 16 zeigen jeweils eine Einrichtung 4 gemäß Figur 9, wobei zwei Anpresslagen 5 vorgesehen sind, die die Isolationslage 6 flächig umgeben. Die Anpresslagen 5 umgeben dabei die Isolationslage 6 zusätzlich an zwei Stirnflächen umgeben (Figur 15). Diese Anordnung erlaubt den Einsatz von Isolationslagen 6, aus welchen bauartbedingt Partikel freigesetzt werden können. Bei der Ausgestaltung gemäß Figur 16 decken zwei Anpresslagen 5 die Isolationslage 6 flächig ab. Diese Ausführung ist einfach herstellbar.

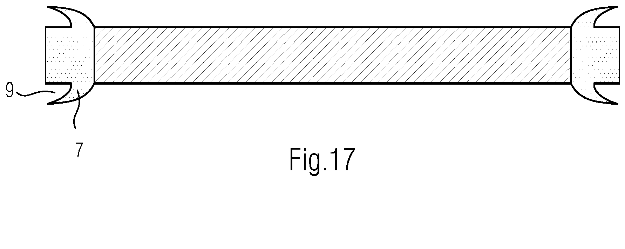

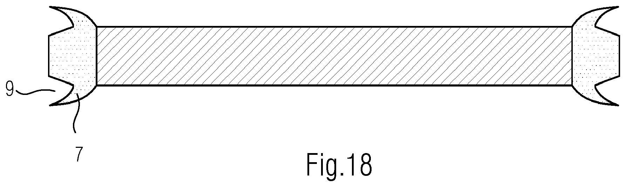

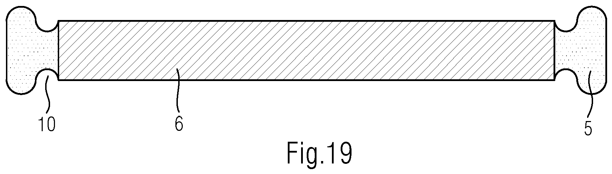

Figuren 17 bis 19 zeigen Einrichtungen 4, bei denen die Isolationslage 6 lediglich an den Stirnseiten oder rahmenartig von der Anpresslage 5 umgeben sind. Diese Ausführungen erlauben den Einsatz von weniger druckstabilen Isolationslagen 6. Die Anpresslage 5 kann dabei verformbare Strukturelemente 7 aufweisen. Bei der Ausgestaltung gemäß Figur 17 sind die verformbare Strukturelemente 7 aus einem Silikon-Elastomer ausgeführt. Im komplett verformten Zustand ist die Dicke der einen Rahmen formenden Anpresslage 5 immer noch größer als die Dicke der Isolationslage 6. Bei der Ausgestaltung gemäß Figur 18 sind Aussparungen 9 vorgesehen, in welche sich die verformbaren Strukturelemente 7 einlegen können. Die Dicke der einen Rahmen formenden Anpresslage 5 ist im komplett verformten Zustand in etwa so hoch wie die der Isolationslage 6. Bei der Ausgestaltung gemäß Figur 19 sind weitere Aussparungen 10 vorgesehen, in welche insbesondere ein weiches Silikonmaterial verpresst werden kann. Auch hier entspricht die Dicke des Rahmens der Anpresslage 5 im komplett verformten Zustand der Dicke der Isolationslage 6.

In allen Ausführungen kann die Verformbarkeit der Anpresslage den mechanischen Eigenschaften der Isolationslage 6 angepasst werden. Aufgrund der vergleichsweise geringen Auflagefläche der Anpresslage 5 können relativ harte Materialien eingesetzt werden, da die resultierenden Kräfte auf die Anpresslage 5 hoch sind. Auf der anderen Seite können dadurch auch besonders leicht verformbare Isolationslagen 6 genutzt werden.

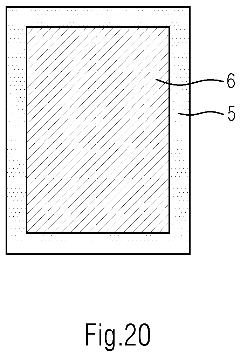

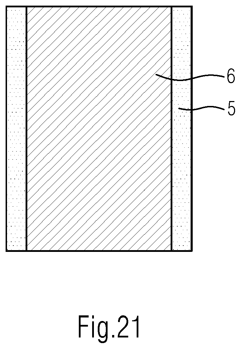

Figur 20 zeigt Ausführungen der in den Figuren 17 bis 19 gezeigten Einrichtung 4, bei welcher die Anpresslage 5 die Isolationslage 6 entlang der Kanten allseitig umgibt. Figur 21 zeigt Ausführungen der in den Figuren 17 bis 19 gezeigten Einrichtung 4, bei welcher die Anpresslage 5 die Isolationslage 6 entlang von zwei einander gegenüberliegenden Kanten umgibt.

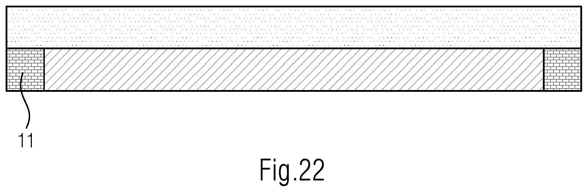

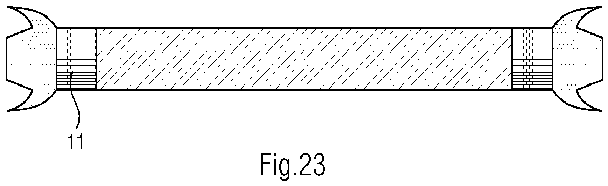

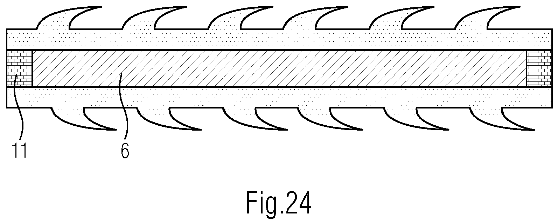

Figuren 22 bis 24 zeigen eine Einrichtung 4, in welcher die Isolationslage 6 stirnseitig oder umfänglich von einem weiteren Rahmenelement 11 umgeben ist. Das Rahmenelement 11 hat hierbei in etwa die Dicke der Isolationslage 6. Das Rahmenelement 11 kann hierbei aus einem härteren Werkstoff bestehen, beispielsweise einem hoch-shorigen Silikon-Elastomer. Dadurch wird die Isolationslage 6 auch bei hohen mechanischen Kräften vor einer Deformation geschützt.

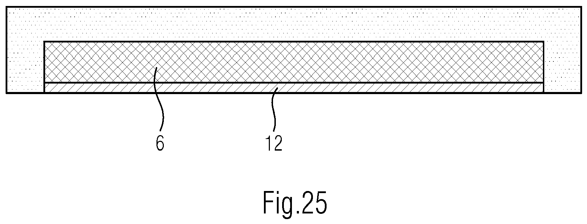

Figur 25 stellt eine Einrichtung 4 dar, bei der die Isolationslage 6 von einer Abdecklage 12 bedeckt ist. Die Abdecklage 12 stellt sicher, dass bei der Montage und im Betrieb der Einrichtung 4 keine Partikel aus der Isolationslage 6 freigesetzt werden. Durch Vorhandensein einer solchen Abdecklage 12 können für die Isolationslage 6 auch Materialien verwendet werden, die wenig Binder enthalten. Es ist auch der Einsatz von Partikelschüttungen, z.B. aus Aerogelen, Hohlkugeln oder ultra-porösen Füllstoffen denkbar.

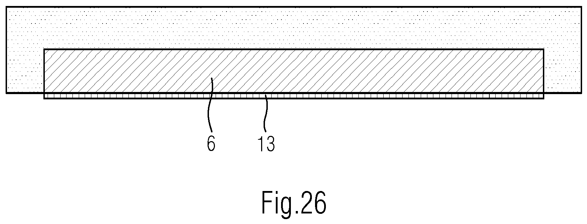

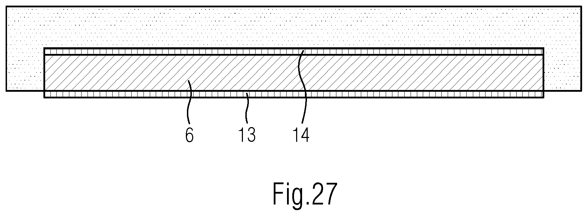

Figuren 26 und 27 zeigen weitere Ausführungen der Einrichtung 4. Bei der Ausgestaltung gemäß Figur 26 ist auf der Isolationslage 6 ein äußeres Klebeband 13 appliziert, welches sowohl die Isolationslage 6 schützt als auch zur Assemblierung der Einrichtung 4 auf das Gehäuse der Speicherzelle 3 genutzt werden kann.

Bei der Ausgestaltung gemäß Figur 27 enthält die Isolationslage 6 zudem eine innere Klebeschicht 14. Diese dient der vorgeschalteten Assemblierung der Anpresslage 5 und der Isolationslage 6. Dadurch können zwei in sich optimierte Lagen hergestellt werden und diese beispielsweise in einem Laminierungsprozess vereint werden.

## Patentansprüche

1. Energiespeichersystem (1), umfassend ein Gehäuse (2), in welchem mehrere Speicherzellen (3) angeordnet sind, wobei die Speicherzellen (3) mittels einer zwischen den Speicherzellen (3) angeordneten Einrichtung (4) voneinander getrennt sind, wobei die Einrichtung (4) zumindest zwei Lagen (5, 6) aufweist, **dadurch gekennzeichnet, dass** eine erste Lage (5) eine Anpresslage und eine zweite Lage (6) eine Isolationslage bildet.

2. Energiespeichersystem nach Anspruch 1, **dadurch gekennzeichnet, dass** die Anpresslage elastisch ausgebildet ist.

3. Energiespeichersystem nach Anspruch 1 oder 2, **dadurch gekennzeichnet, dass** die Anpresslage verformbar ausgestaltet ist.

4. Energiespeichersystem nach einem der Ansprüche 1 bis 3, **dadurch gekennzeichnet, dass** die Anpresslage aus elastischem Werkstoff ausgebildet ist.

5. Energiespeichersystem nach einem der Ansprüche 1 bis 4, **dadurch gekennzeichnet, dass** die Anpresslage zumindest auf einer einer Speicherzelle (3) zugewandten Seite strukturiert ist.

6. Energiespeichersystem nach einem der Ansprüche 1 bis 5, **dadurch gekennzeichnet, dass** die Anpresslage die Isolationslage entlang der Kanten zumindest abschnittsweise umgibt.

7. Energiespeichersystem nach Anspruch 6, **dadurch gekennzeichnet, dass** die Anpresslage benachbarte Speicherzellen (3) kontaktiert.

8. Energiespeichersystem nach Anspruch 6 oder 7, **dadurch gekennzeichnet, dass** die Isolationslage in die Anpresslage eingebettet ist.

9. Energiespeichersystem nach einem der Ansprüche 1 bis 8, **dadurch gekennzeichnet, dass** aus der Anpresslage fluidleitende Strukturen ausgebildet sind.

10. Energiespeichersystem nach einem der Ansprüche 1 bis 9, **dadurch gekennzeichnet, dass** die Isolationslage inkompressibel ausgestaltet ist.

11. Energiespeichersystem nach einem der Ansprüche 1 bis 10, **dadurch gekennzeichnet, dass** die Isolationslage aus porösem Material ausgebildet ist.

12. Energiespeichersystem nach einem der Ansprüche 1 bis 11, **dadurch gekennzeichnet, dass** die Isolationsschicht zumindest teilweise aus anorganischem Material ausgebildet ist.

13. Energiespeichersystem nach einem der Ansprüche 1 bis 12, **dadurch gekennzeichnet, dass** die Isolationsschicht faserhaltiges Material umfasst.

14. Energiespeichersystem nach einem der Ansprüche 1 bis 13, **dadurch gekennzeichnet, dass** die Isolationsschicht thermisch isolierende Partikel umfasst.

15. Energiespeichersystem nach Anspruch 14, **dadurch gekennzeichnet, dass** die thermisch isolierenden Partikel Hohlkugeln, hochporöse Partikel und/oder Aerogele umfassen.

16. Energiespeichersystem nach einem der Ansprüche 1 bis 15, **dadurch gekennzeichnet, dass** zwischen Anpresslage und Isolationslage eine Verstärkungslage angeordnet ist.
